# EUROPEAN PATENT APPLICATION

(11) **EP 4 803 262 A1**
(43) Date of publication of application: **09.09.2026**
(21) Application number: 26158145.8
(22) Date of filing: 12.02.2026
(51) Int. Cl.: B25B 23/14

(54) **SINGLE OR DUAL REDUNDANCY TRANSDUCER**

(30) Priority: 04.03.2025 US 202563766765 P; 03.02.2026 US 202619468554
(71) Applicant: Ingersoll-Rand Industrial U.S., Inc., Davidson, NC 28036 (US)
(72) Inventor: BOK, Timothy, Davidson, 28036 (US); BECKER, Daniel, Davidson, 28036 (US)
(74) Representative: Murgitroyd & Company

(57) **Abstract**

A torque transducer for a power tool having a housing, an output spindle, and a motor, mounted in the housing, for delivering torque to the output spindle via a drive train having a ring gear. The torque transducer includes a hub having distal first and second ends; a first disk-shaped member having a first outer rim, configured to engage the ring gear, and a first web extending between the first end of the hub and the first outer rim; and a second disk-shaped member having a second outer rim, configured to ground the torque transducer to the housing, and a second web extending between the second end of the hub and the second outer rim. First and second webs receive a strain gauge assembly for measuring strain in the first and second web and generating an output signal proportional to the torque delivered to the spindle of the power tool.

## Description

### BACKGROUND

Monitoring the output torque of power tools and other rotating machinery is often desirable. In the case of power tools, such as screwdrivers, nutrunners, and the like, the monitored data permits measurement of the rotational torque output and thereby calculation of output produced by the tool. Real time feedback coupled with programmable controls makes it possible to automatically adjust tool operation (e.g., deactivate the tool power, such as when a desired fastener torque is achieved). This provides the benefit of reproducible fastener torque in precision environments and/or assembly line or other mass production operations.

### DRAWINGS

The Detailed Description is described with reference to the accompanying figures.
FIG. 1 is a side perspective view illustrating a power tool in accordance with example embodiments of the present disclosure.
FIG. 2 is an exploded view illustrating the internal components of the power tool of FIG. 1, in accordance with example embodiments of the present disclosure.
FIGS. 3A and 3B are exploded views illustrating the internal components of the power tool of FIG. 1 including a torque transducer in accordance with example embodiments of the present disclosure.
FIG. 4 is a cross-sectional view of a portion of the power tool of FIG. 1 further illustrating the torque transducer in accordance with example embodiments of the present disclosure.
FIG. 5 is a front view of the torque transducer, in accordance with example embodiments of the present disclosure.
FIG. 6 is a side perspective view of the torque transducer, in accordance with example embodiments of the present disclosure.
FIG. 7 is a side perspective view of the torque transducer, in accordance with example embodiments of the present disclosure
FIG. 8 is a cross-sectional view of the torque transducer, in accordance with example embodiments of the present disclosure.

### DETAILED DESCRIPTION

While the subject matter has been illustrated and described in detail in the drawings and foregoing description, the same is to be considered as illustrative and not restrictive in character, it being understood that only example embodiments have been shown and described and that all changes and modifications that come within the spirit of the subject matters are desired to be protected. In reading the claims, it is intended that when words such as "a," "an," "at least one," or "one of a plurality of" are used there is no intention to limit the claim to only one item unless specifically stated to the contrary in the claim. Unless specified or limited otherwise, the terms "mounted" and "connected" and variations thereof are used broadly and encompass both direct and indirect mountings, connections, and couplings. Further, "connected" is not restricted to physical or mechanical connections or couplings.

### Overview

Monitoring of dynamic stresses and strains in power tools and other rotating machinery is often desirable. The data received from such monitoring permits evaluation of the performance of the equipment in question. In the case of power tools, such as screwdrivers, nutrunners, and the like, the monitored data permits measurement of the torque output and thereby determination of the fastener torque produced by the tool. Moreover, real time feedback coupled with programmable controls make it possible to automatically deactivate the tool power when a desired fastener torque is achieved. This feature provides the benefit of reproducible fastener torque in assembly line or other mass production operations. In most torque delivering power tools, it is desired to continuously measure the torque delivered by the tool (*e.g*., to a joint). In general, the torque may be measured anywhere along the drive train from the motor to the output shaft.

A variety of transducers exist to measure the torque output of rotating machines. In many cases, such transducers employ a tubular design placed in distinct locations of the power tool. However, in such designs, the axial dimensions of the transducer are such that its use requires an unacceptable increase in the size (length) of the tool. Consequently, it may be difficult or even impossible to use the tool in an environment having limited space. Thus, fastener torque can only be determined by use of tool combinations that increase assembly time and may have questionable accuracy. In addition, an excessive increase in size can contribute to increased weight and unwieldy proportions, which can contribute to premature operator fatigue and otherwise degrade operator performance.

Additionally, some applications, (for example, automotive industry applications, in which safety critical fastening is necessary) require redundant measurement of the output torque of the tool. In such applications, the tool may include at least two independent transducers that provide redundant measurement of the output torque of the tool. The torque output measurements can then be compared to furnish proof of fastening torque, wherein the measured torque should be the same when the power tool is functioning nominally. Current solutions for meeting the requirement of redundant torque measurement typically employ multiple tubular design torque transducers to furnish separate strain gauges on separate substrate materials in a serial configuration. These transducers can be arranged either end-to- end or in different locations along the power train of the tool, significantly increasing the length of the tool.

Accordingly, the present disclosure is directed to a torque transducer that can be configured to provide redundant measurement of the output torque of a power tool. In embodiments, the power tool includes a housing, an output spindle, and a motor mounted in the housing for delivering torque to the output spindle via a drive train having a ring gear. The torque transducer includes a hub having distal first and second ends, a first disk-shaped member having a first outer rim and a first web that extends between the first end of the hub and the first outer rim, and a second disk-shaped member having a second outer rim and a second web that extends between the second end of the hub and the second outer rim. In embodiments, the first outer rim is configured to engage the ring gear, while the second outer rim is configured to ground the torque transducer to the housing, placing the torque transducer in the load path between the ring gear and the housing. In embodiments, the outer circumference of the first outer rim and the outer circumference of the second outer rim have the same diameter.

In embodiments, at least one of the first web and the second web are configured to receive a strain gauge assembly operable to measure strain in the first web or the second web and to generate an output signal in response thereto. The output signal is used to determine the torque delivered to the spindle of the power tool. For example, in embodiments, the strain gauge assembly includes a first strain gauge assembly coupled to the first web for measuring strain in the first web and generating a first output signal configured for use in determining the torque delivered to the spindle of the power tool. The strain gauge assembly can also include a second strain gauge assembly coupled to the second web for measuring strain in the second web and generating a second output signal configured for use in determining the torque delivered to the spindle of the power tool. In embodiments, the first signal and the second signal are independent and redundant.

### Detail Description of Example Embodiments

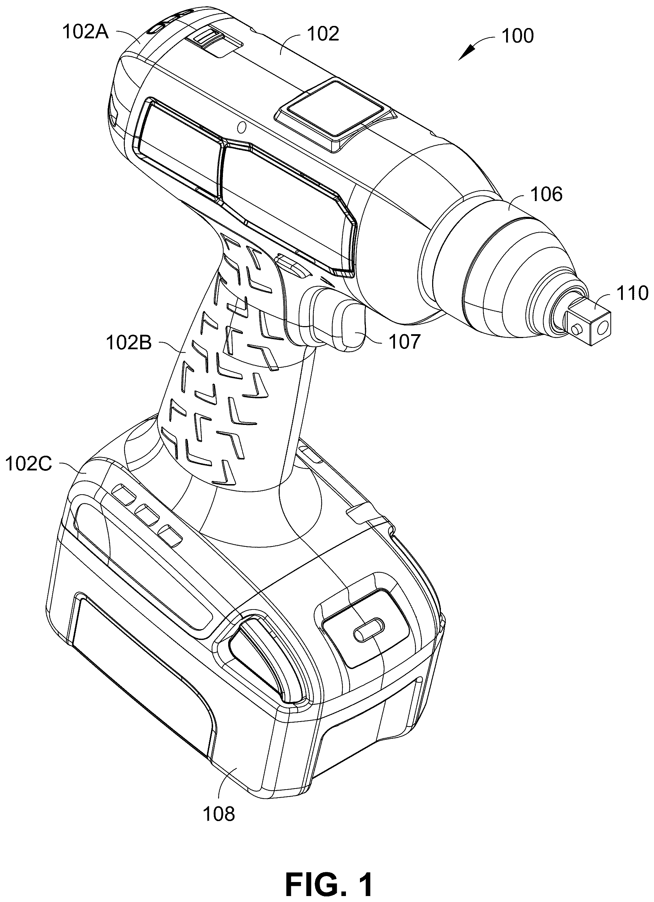

Referring generally to FIGS. 1 through 7, a torque transducer that can be configured to provide redundant measurement of the output torque of a power tool is described.

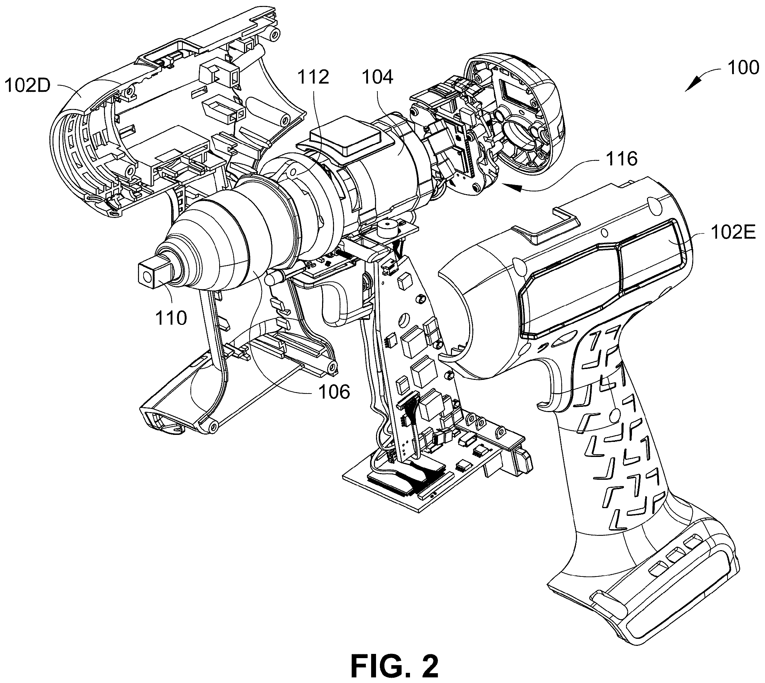

FIGS. 1 and 2 illustrate an example power tool 100 employing a torque transducer in accordance with the present disclosure. As shown, the power tool 100 includes a housing 102, a motor 104 (shown in FIG. 2), a gearcase 106 and an output spindle 110. The housing 102 at least partially encases the motor 104 and the gearcase 106 so that a forward portion of the gearcase 106 and output spindle 110 extend from the front of the power tool 100. In the embodiment illustrated, the power tool 100 has a pistol-grip configuration, comprised of a main housing portion 102A that encloses the motor 104 and gearcase 106 and a pistol-grip 102B extending from the main housing portion 102A, which is grasped by the user to use the power tool 100. However, in various embodiments, the power tool 100 may have other configurations such as an angle or right-angle configuration (*e.g*., a nutrunner), and so forth. As shown in FIG. 1, the pistol-grip 102B includes a battery receptacle 102C disposed at the end of the pistol grip 102B that is configured to receive a removable battery 108 for furnishing electrical power to the motor 104. The power tool 100 further includes external controls such as a trigger 107 to allow the user to control operation of the power tool 100. In some embodiments, the power tool includes a user interface (not shown) with a display.

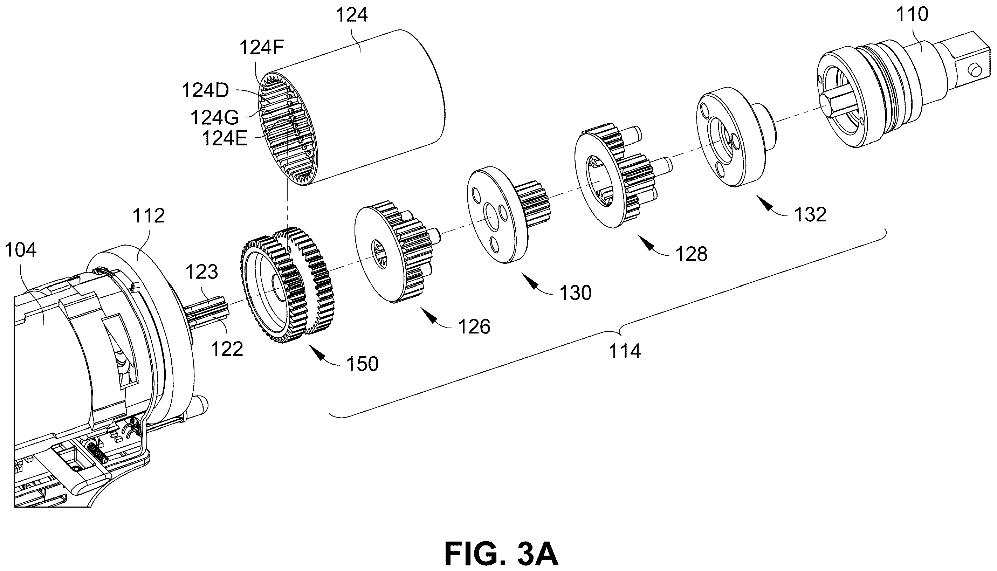

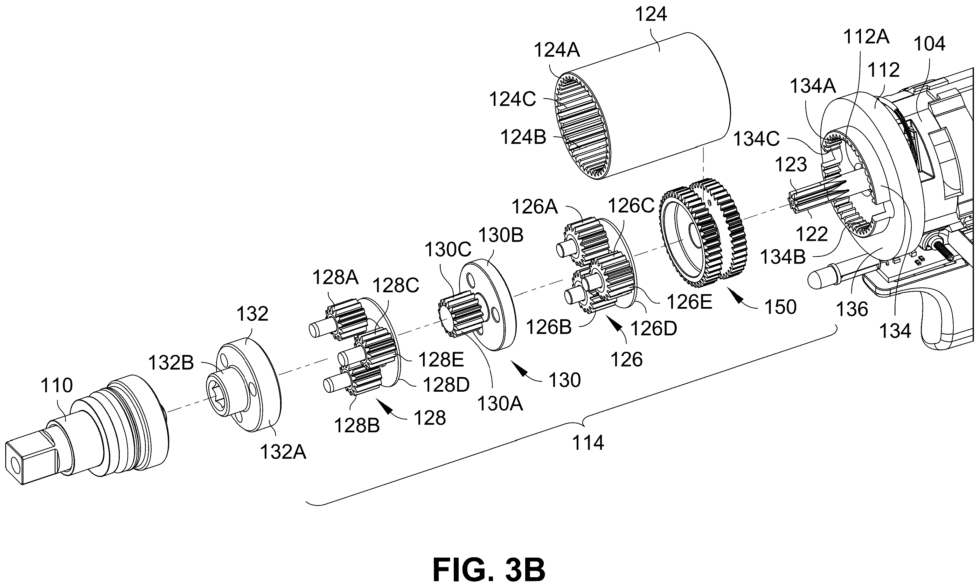

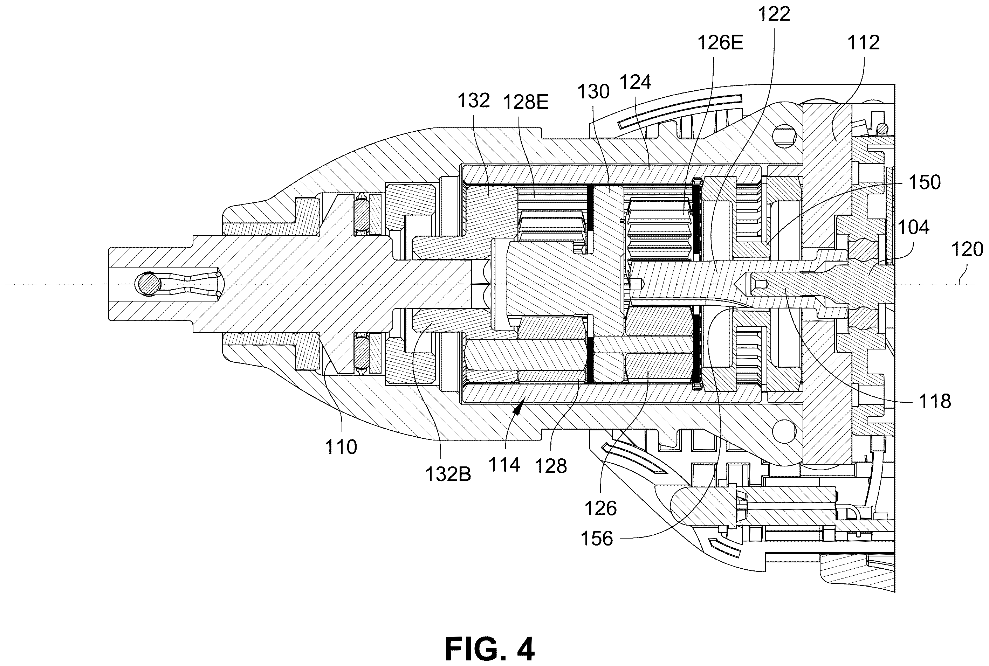

As shown in FIGS. 2, 3, and 4, the motor 104 is supported within the housing 102 by a motor mount 112 so that motor 104 is immobile (fixed in position) with respect to the housing 104. The gearcase 106 is rigidly mounted to the motor mount 112 and encloses a drive train 114 (shown in FIGS. 3, 4). Specifically, in the embodiment shown in FIG. 4, the motor 104 is rigidly attached to a first side of the motor mount 112 while the gearcase 106 is attached to a second side of the motor mount 112, opposite the first side, and is locked to the motor mount 112. The gearcase 106 (and encased drive train 114) with the motor mount 112 and motor 104 define or form part of a motor sub-assembly 116 that can be retained within the housing 102, for example, between mated housing halves 102D, 102E of the housing 102, as shown in FIG. 2. In the embodiment illustrated in FIGS. 2, 3, and 4, the motor 104 is supported within the housing 102 by the motor mount 112. However, it should be appreciated that, in other embodiments, the motor 104 may be supported within the housing 102 in a variety of ways. For example, the motor 104 may be fastened directly to the housing 102 without using a motor mount 112, *e.g.,* using fasteners (screws, bolts, etc.), glue, or the like, or may employ other intermediate mounting structures.

As shown in FIGS. 3 and 4, the motor 104 includes a rotor 118 that extends toward the output spindle 110 and has a centerline that that is coaxial with a center axis 120 of the drive train 114. The rotor 118 is coupled to an output pinion 122 having a plurality of teeth 123 (shown in FIGS. 3A and 3B). When the motor 104 is powered (operating), the rotor 118 drives (turns) the output pinion 122, which engages the drive train 114, driving the output spindle 110.

The drive train 114 comprises an epicyclic (planetary) gear train including a ring gear 124, a first planet gear assembly 126 (three planet gears 126A, 126B, 126C are shown supported by a carrier 126D), a second planet gear assembly 128 (three planet gears 128A, 128B, 128C are shown supported by a carrier 128D), and a sun gear assembly 130 (a sun gear 130A supported by a carrier 130B) disposed inside the ring gear 124. Each of the planet gears 126A, 126B, 126C of the first planet gear assembly 126 includes teeth 126E. Similarly, each of the planet gears 128A, 128B, 128C of the second planet gear assembly 128 includes teeth 128E. The ring gear 124 is substantially fixed against rotation relative to the housing 102 (*e.g.,* the ring gear 124 does not itself rotate except for a slight rotation with respect to the housing 102, which loads (i.e., transfers torque to) the torque transducer 150) and defines an outer wall for the sets of planet gears 126, 128. As shown, the ring gear 124 is generally cylindrical and includes a wall 124A with an inner surface 124B that includes ring gear teeth 124C. The teeth 126E, 128E of the planet gears 126A, 126B. 126C, 128A, 128B, 128C mesh with the ring gear teeth 124C as the first and second sets of planet gears 126, 128 rotate inside the ring gear 124 during operation.

The output pinion gear 122 extends through the carrier 126D of the first planet gear assembly 126 and meshes with planet gears 126A, 126B, 126C (i.e., the teeth 126E of the planet gears 126A, 126B, 126C mesh with teeth 123 of the output pinion gear 122). The first planet gear assembly 126 engages the carrier 130B of the sun gear assembly 130, causing the sun gear assembly 130 to turn when the motor 104 is powered (operating). Similarly, the sun gear 130A of the sun gear assembly 130 extends though the carrier 128D of the second planet gear assembly 128 and meshes with planet gears 128A, 128B, 128C (i.e., the teeth 128E of the planet gears 128A, 128B, 128C mesh with teeth 130C of the sun gear 130). Thus, the first planet gear assembly 126 orbits about the output pinion 122 within the ring gear 124 and drives the sun gear assembly 130. The sun gear assembly 130, in turn, drives the second planet gear assembly 128, which orbit about the sun gear 130A of the sun gear assembly 130 within the ring gear 124. The second planet gear assembly 128 engages and drives a planet carrier 132, which is coupled to and drives the spindle output 110. In the embodiment shown, the planet carrier 132 includes a portion 132A that is disposed within the ring gear 124 and a center hub 132B (shown in FIG. 4) that extends a distance outside the ring gear 124 and engages the output spindle 110.

Referring to FIGS. 2 through 4, the motor mount 112 is fixed to the housing 102 to inhibit rotation of the motor 104 with respect to the housing 102. For example, in some embodiments, the motor mount 112 may be attached to the housing 102 using one or more pins. As shown, the motor mount 112 can include an aperture 112A formed about the center axis 120 of the drive train 114 through which the output pinion 122 extends. In embodiments, the motor mount 112 includes one or more bearings 112B disposed within the aperture 112A to support the output pinion 122.

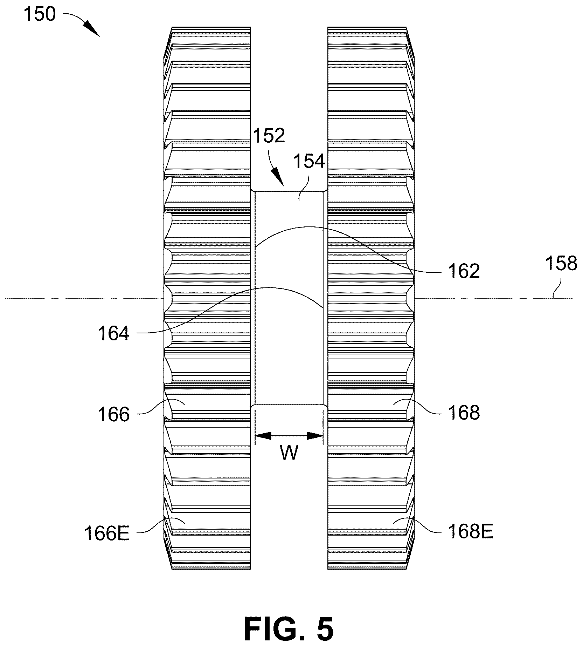

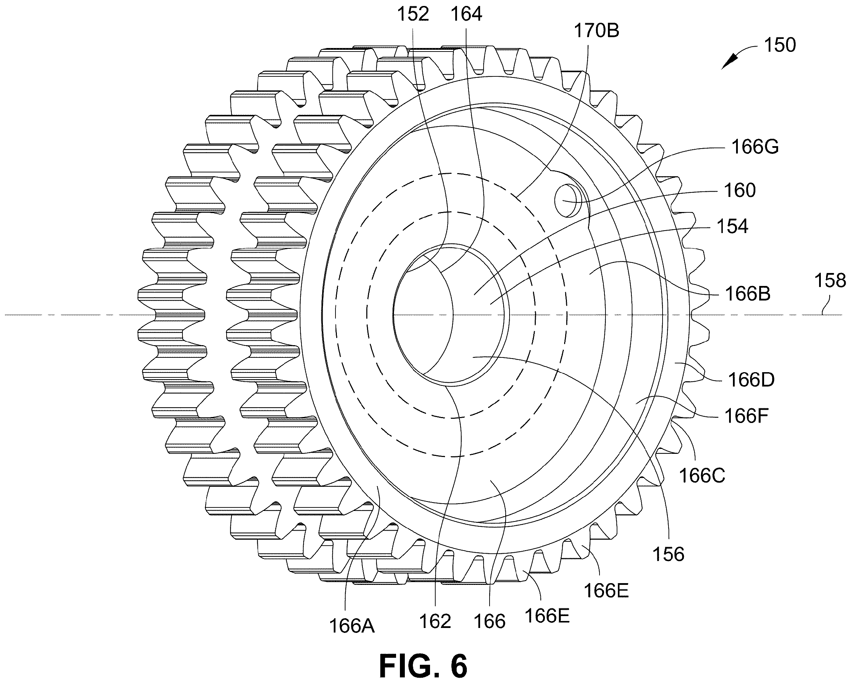

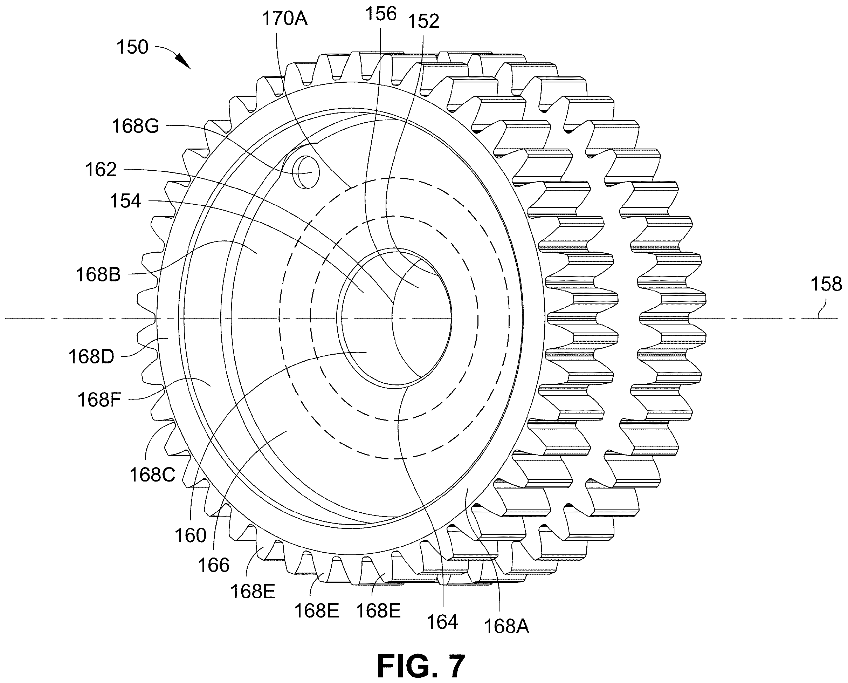

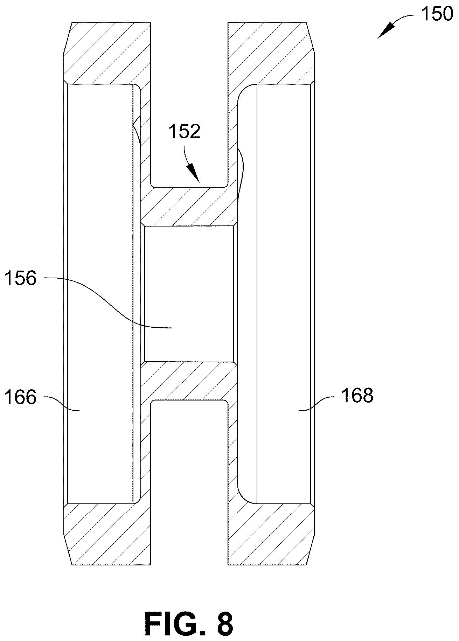

In accordance with the present disclosure, a torque transducer 150 is positioned between the ring gear 124 and the motor 104 (as shown in FIGS. 2 through 4) so that the torque transducer 150 is in the load path between the ring gear 124 and the housing 102. As shown in FIGS. 5 through 8, the torque transducer 150 includes a hub 152 comprising a cylinder 154 defining a cylindrical open channel 156 having an axis 158 that is co-linear with the drive train axis 114. In embodiments, the surface wall 160 of the cylindrical open channel 156 is smooth and the channel is sized to receive the output pinion 122 inserted therethrough. The hub 152 has distal first and second ends 162, 164, respectively, spaced apart a width "w". As shown in FIGS. 6 and 7, the cylindrical open channel 156 has a diameter that is larger than the diameter of the output pinion 122 allowing the output pinion 122 to rotate freely while the hub 152 is fixed with respect to the housing 102. The torque transducer 150 further includes a first disk-shaped member 166 and a second disk-shaped member 168.

As shown in FIGS. 6 through 8, the first disk-shaped member 166 includes a first outer rim 166A and a first web 166B that extends between the first end 162 of the hub 152 and the first outer rim 166A. The first outer rim 166A includes a first outer surface 166C having a first outer circumference 166D. A first external spline 166E is arranged around the first outer circumference 166D. In embodiments, the first outer rim 166A is coupled to the first web 166B, such that the first web 166B is generally perpendicular to an inner surface 166F of the first outer rim 166A and extends inwardly toward the hub 152 at or near an inner edge of the first outer rim 166A. This configuration provides substantially even stress distribution over the entire first web 166B by minimizing bending stresses on the first web 166B created by the first outer rim 166A.

Similarly, the second disk-shaped member 168 includes a second outer rim 168A and a second web 168B that extends between the second end 164 of the hub 152 and the second outer rim 168A. The second outer rim 168A includes a second outer surface 168C having a second outer circumference 168D. A second external spline 168E is arranged around the second outer circumference 168D. In embodiments, the second outer rim 168A is coupled to the second web 168B, such that the second web 168B is generally perpendicular to an inner surface 168F of the second outer rim 168A and extends inwardly toward the hub 152 at or near an inner edge of the second outer rim 168A. Again, this configuration provides substantially even stress distribution over the entire second web 168B by minimizing bending stresses on the second web 168B created by the second outer rim 168A.

As shown in FIGS. 3A and 4, the ring gear 124 includes an end portion 124D that is configured to receive the first disk-shaped member 166A of the torque transducer 150. In embodiments, the end portion 124D includes a "stop" location 124E to control the depth of insertion of the first disk-shaped member 166A into the end portion 124D. As shown, the end portion 124D of the ring gear 124 includes an inner circumference 124F having a first internal spline 124G that is configured to mesh with the first external spline 166E of the first disk-shaped member 166A when the torque transducer 150 is engaged with the ring gear 124.

As shown in FIGS. 3B and 4, the motor mount 112 includes a generally ring-shaped member 134 protruding from the body 136 of the motor mount 112 about axis 120 toward the drive train 114. The ring-shaped member 134 is configured to receive the second disk-shaped member 168A of the torque transducer 150. As shown, the ring-shaped member 134 of the motor mount 134 includes an inner surface 134A defining an inner circumference 134B having a second internal spline 134C that is configured to mesh with the second external spline 168E of the second disk-shaped member 168A when the torque transducer 150 is engaged with the motor mount 112.

The first web 166B of the first disk-shaped member 166 is configured to receive a first strain gauge assembly 170A operable to measure strain induced in the first web 166B and to generate a first output signal that is representative of the measured strain. The first output signal is configured for use in determining the torque delivered to the output spindle 110 of the power tool 100 by the motor 104 and drive train 114. In embodiments, the second web 168B of the second disk-shaped member 168 is configured to receive a second strain gauge assembly 170B operable to measure strain induced in the second web 168B and to generate a second output signal that is representative of the measured strain. The second output signal is configured for use in determining the torque delivered to the spindle 110 of the power tool 100. In some embodiments, the first and second strain gauge assemblies 170A and 170B include multiple strain gauges arranged on the respective webs 166A, 166B. However, any suitable number of strain gauges can be utilized to provide accurate strain data. In some embodiments, the first and second web 166B and 168B may be provided with protective potting (not shown) concentrically disposed around the first and second web 166B and 168B. The protective potting (*e.g.,* resin, epoxy, etc.) is used to protect the first and second strain gauge assemblies 170A and 170B and any connective interface provided therebetween from potential damage or fouling. The protective potting is sealed to the first and second web 166B and 168B using a multi-layer sealing process

In embodiments, the strain gauge assembly 170A of the torque transducer 150 is electrically connected (*e.g.,* to transmit the first output signal) to a control circuit (not shown) in the housing 102 of the power tool 100 via wiring extending from the strain gauge assembly 170A through an aperture 166G (shown in FIG. 6). Similarly, in embodiments, the second strain gauge assembly 170B of the torque transducer 150 is electrically connected (*e.g.,* to transmit the second output signal) to the control circuit (not shown) in the housing 102 via wiring extending from the second strain gauge assembly 170B through an aperture 168G (shown in FIG. 7). In embodiments, the first output signal and the second output signal are independent and redundant.

The torque transducer 150 is inhibited from moving radially by the housing 102, the motor mount 112 and the ring gear 124. As discussed above, the motor mount 112 is fixed to the housing 102. The torque transducer 150 is inhibited from rotating with respect to the motor mount 112 by the mesh of second external spline 168E and the second internal spline 134C. In operation, the ring gear 124 cooperates with the torque transducer 150 to redirect the load caused by movement of the ring gear 124 to the first disk-shaped member 166. For example, when the first planet gear assembly 126 and the second planet gear assembly 128 experience increased resistance to rotation, such as when a fastener has been fully inserted into a workpiece by the power tool 100, the first planet gear assembly 126 and the second planet gear assembly 128 transfer (at least some) torque to the ring gear 124. The ring gear 124, in turn, transfers the torque to the first disk-shaped member 166 of the torque transducer 150 via the mesh of the first internal spline 124G and the first external spline 166E of the first disk-shaped member 166. The torque can be measured by the first strain gauge assembly 170A in the first web 166B of the first disk-shaped member 166. Additionally, this torque can be transferred to the hub 152 and then from the hub 152 to the second disk-shaped member 168, where the strain induced by the torque can be measured by the second strain gauge assembly 170B disposed on the second web 168B of the second disk-shaped member 168 and the torque determined. In embodiments, when the torque exceeds a set predetermined amount, the motor 104 of the power tool 100 can be turned off to stop rotation of the output spindle 110. The measured torque by the first web 166B and the measured torque by the second web 168B are transmitted to the control circuit described above. The control circuit can compare the two measured torques which, in embodiments, have the same numerical value when the power tool is functioning nominally. In some embodiments, when the measured torque by the first web 166B and the measured torque by the second web 168B are different, the control circuit is configured to stop the power tool 100 and alert a user. Thus, the torque transducer 150 provides an independent, redundant torque measurement. Moreover, the configuration of the torque transducer 150 allows the length of the drive train 114 to be made shorter compared to those of power tools wherein redundant torque measurement is achieved by employing multiple torque transducers having tubular configurations. However, in embodiments where redundant torque measurement is not desired, the control circuit can be configured to receive the measured torque from only one of the strain gauge assemblies 170A 170B, or one of the strain gauge assemblies 170A, 170B can be eliminated.

As described above, the torque transducer 150 is grounded to the housing 102, i.e., placed in the load path between the ring gear 124 and the housing 102. For example, in the embodiment illustrated, the second outer rim engages 168A engages the motor mount 112, which is rigidly attached to the housing 102, to ground the torque transducer 150 to the housing 102. As the ring gear 124 tries to rotate relative to the housing 102, the ring gear 124 deflects the transducer tangentially. As the transducer resists this rotation, the reaction torque passes through the first strain gauge assembly 170A in the first web 166B of the first disk-shaped member 166 on its way to ground (*e.g.,* the housing 102, which in turn is reacted by a user holding the housing 102). In other words, the torque transducer 150 is in the load path between the ring gear 124 and ground (*e.g.,* the housing 102).

In the embodiment illustrated, the second outer rim 168A grounds the torque transducer 150 to the housing 102 by engaging the motor mount 112, which is rigidly mounted to the housing 102, so that the torque transducer 150 is placed in the load path between the ring gear 124 and the housing 102. However, it will be appreciated that the torque transducer 150 may be grounded to the housing in other ways. For example, in embodiments, the second outer rim 168A may engage the housing 102 directly, instead of via the motor mount 112, to ground the torque transducer 150 to the housing 102. In other embodiments, the second outer rim 168A may engage an intermediate structure, other than the motor mount 112, to ground the torque transducer 150 to the housing 102. In further embodiments, the second outer rim 168A may engage the motor 104 directly, instead of the motor mount 112, wherein the motor 104 is rigidly coupled to the housing 102, to ground the torque transducer 150 to the housing 102.

In some embodiments, the housing 102 includes a spline (not shown) for receiving the second external spline 168E of the second disk-shaped member 168A with no connection to the motor 104 and the motor mount 112. In some embodiments, the motor mount 112 is not employed and the torque transducer 150 is directly grounded (coupled) to the motor 104 that is, in turn, attached to the housing 102, for example, via an attachment mechanism such as glue (*e.g.,* epoxy), fasteners (*e.g.,* screws, bolts, etc.), or the like. It is to be understood that any other configuration of grounding the torque transducer is also contemplated by the embodiments described herein.

In embodiments, the torque transducer 150 comprises a single unitary and/or monolithic body fabricated of a material that has a large linear elastic range (stress-strain curve) over small displacements. For example, in one embodiment, the torque transducer 150 is formed of a metal such as stainless steel and can be manufactured, for example, by metal injection molding. However, machining or other processes with sufficient precision may also be used to manufacture the torque transducer 150. Moreover, in some embodiments, the torque transducer 150 may be constructed of materials other than stainless steel, such as, for example, other steels (*e.g.,* carbon steel, alloy steel, etc.) aluminum, other metals, ceramic, crystal, combinations thereof, and so forth. The ring gear 124 can be a single unitary and/or monolithic body as well (such as stainless steel, carbon steel, alloy steel, and so on). Other materials may be used for each of these components and other processes may be used to form the desired shapes and features. In some embodiments, the ring gear 124 can be fabricated as two or more bodies that attach to form the ring gear 124. For example, the ring gear 124 can have a two-piece body formed by a first cylinder comprised of a torque transducer receiving portion, such as end portion 124D, for engaging the torque transducer 150 attached to a second cylinder that engages the planet gear assemblies 126, 128 to form the ring gear 124.

In the embodiments illustrated herein, the torque transducer 150 shown employs involute external splines 166E and 168E that engage involute internal splines 124G and 134C of the ring gear 124 and motor mount 112 (or motor or housing), respectively. However, it should be appreciated that other spline types, *e.g.,* straight (rectangular), serrated (triangular), hexagonal, single keyway, etc., may be employed instead of involute splines. Moreover, in some embodiments, the torque transducer 150 may utilize other interface mechanisms, *e.g.,* keyed or interlocking mechanisms, etc., instead of splines 166E, 168E, 124G, and 134C to engage the ring gear 124 and/or motor mount 112 (or motor or housing).

In some embodiments, the inner circumference 124F of the end portion 124D and the first outer rim 166A of the first disk-shaped member 166 have a smooth surface. The inner circumference 124F includes one or more rails and the first outer rim 166A includes one or more slots. The rails are configured to slidably enter the respective slots during assembly. In some embodiments, the ring gear 124 and the torque transducer 150 include both a slot and a rail to (slidably) matably engage.

The following 20 embodiments are also described
1. A torque transducer for a power tool having a housing, an output spindle, and a motor mounted in the housing for delivering torque to the output spindle via a drive train having a ring gear, the torque transducer comprising:
   a hub having distal first and second ends;
   a first disk-shaped member having a first outer rim and a first web extending between the first end of the hub and the first outer rim, the first outer rim configured to engage the ring gear; and
   a second disk-shaped member having a second outer rim and a second web extending between the second end of the hub and the second outer rim, the second outer rim configured to ground the torque transducer to the housing,
   wherein at least one of the first web and the second web is configured to receive a strain gauge assembly operable to measure strain in the first web or the second web and to generate an output signal in response thereto, the output signal configured for use in determining the torque delivered to the spindle of the power tool.
2. The torque transducer as recited in embodiment 1, wherein the power tool further comprises a motor mount configured to mount the motor within the housing so that the motor is immobile with respect to the housing, the second outer rim configured to engage the motor mount for grounding the torque transducer to the housing.
3. The torque transducer as recited in embodiment 2, wherein the first outer rim includes a first outer surface having a first external spline, the first external spline configured to mesh with a first internal spline disposed in a first inner surface of the ring gear.
4. The torque transducer as recited in embodiment 3, wherein the second outer rim includes a second outer surface having a second external spline, the second external spline configured to mesh with a second internal spline disposed in a second inner surface of the motor mount.
5. The torque transducer as recited in embodiment 1, wherein the at least one strain gauge assembly comprises a first strain gauge assembly coupled to the first web for measuring strain in the first web and generating a first output signal in response thereto, the first output signal being proportional to the torque applied the spindle of the power tool.
6. The torque transducer as recited in embodiment 5, wherein the at least one strain gauge assembly comprises a second strain gauge assembly coupled to the second web for measuring strain in the second web and generating a second output signal in response thereto, the second output signal being proportional to the torque applied the spindle of the power tool.
7. The torque transducer as recited in embodiment 6, wherein the first signal and the second signal are independent and redundant.
8. A power tool, comprising:
   a housing;
   a motor mounted within the housing, the motor including an output pinion;
   a drive train operably coupled to the output pinion of the motor and operable to deliver torque from the output pinion to a spindle of the power tool, the drive train including a ring gear; and
   a torque transducer configured to measure the torque delivered to the spindle, the torque transducer including:
      a hub having distal first and second ends,
      a first disk-shaped member having a first outer rim configured to engage the ring gear and a first web extending between the first end of the hub and the first outer rim, and
      a second disk-shaped member having a second outer rim configured to ground the torque transducer to the housing and a second web extending between the second end of the hub and the second outer rim; and
      at least one strain gauge assembly coupled to at least one of the first web and the second web, the at least one strain gauge assembly is configured to measure strain in at least one of the first web and the second web and to generate an output signal in response thereto, the output signal configured for use in determining the torque delivered to the spindle of the power tool.
9. The power tool as recited in embodiment 8, wherein the first outer rim includes a first outer surface having a first external spline and the ring gear includes a first inner surface having a first internal spline, the first external spline configured to mesh with the first internal spline.
10. The power tool as recited in embodiment 8 or 9, further comprising a motor mount configured to mount the motor within the housing so that the motor is immobile with respect to the housing, wherein the second outer rim includes a second outer surface having a second external spline and the motor mount includes a second inner surface having a second internal spline, the second external spline configured to mesh with the second internal spline for grounding the torque transducer to the housing.
11. The power tool as recited in embodiment 8, wherein the at least one strain gauge assembly comprises a first strain gauge assembly coupled to the first web for measuring strain in the first web and generating a first signal in response thereto, the first signal configured for use in determining the torque applied to the spindle of the power tool.
12. The power tool as recited in embodiment 11, wherein the at least one strain gauge assembly comprises a second strain gauge assembly coupled to the second web for measuring strain in the second web and generating a second signal in response thereto, the second output signal being proportional to the torque applied to the spindle of the power tool.
13. The power tool as recited in embodiment 12, wherein the first signal and the second signal are independent and redundant.
14. A torque transducer for a power tool having a housing, an output spindle, and a motor mounted in the housing for delivering torque to the output spindle via a drive train having a ring gear, the torque transducer comprising:
   a hub having distal first and second ends;
   a first disk-shaped member having a first outer rim and a first web extending between the first end of the hub and the first outer rim, the first outer rim configured to engage the ring gear of the drive train; and
   a second disk-shaped member having a second outer rim and a second web extending between the second end of the hub and the second outer rim, the second outer rim configured to ground the torque transducer to the housing.
15. The torque transducer as recited in embodiment 14, wherein the power tool further comprises a motor mount configured to mount the motor within the housing so that the motor is immobile with respect to the housing, the second outer rim configured to engage the motor mount for grounding the torque transducer to the housing.
16. The torque transducer as recited in embodiment 15, wherein the first outer rim includes a first outer surface having a first external spline, the first external spline configured to mesh with a first internal spline disposed in a first inner surface of the ring gear.
17. The torque transducer as recited in embodiment 16, wherein the second outer rim includes a second outer surface having a second external spline, the second external spline configured to mesh with a second internal spline disposed in a second inner surface of the motor mount.
18. The torque transducer as recited in embodiment 14, wherein the first web is configured to receive a first strain gauge assembly for measuring strain in the first web and generating a first output signal in response thereto, the first output signal configured for use in determining the torque delivered to the spindle of the power tool.
19. The torque transducer as recited in embodiment 18, wherein the second web is configured to receive a second strain gauge assembly for measuring strain in the second web and generating a second output signal in response thereto, the second output signal configured for use in determining the torque delivered to the spindle of the power tool.
20. The torque transducer as recited in embodiment 19, wherein the first signal and the second signal are independent and redundant.

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

## Claims

1. A torque transducer for a power tool having a housing, an output spindle, and a motor mounted in the housing for delivering torque to the output spindle via a drive train having a ring gear, the torque transducer comprising:
a hub having distal first and second ends;
a first disk-shaped member having a first outer rim and a first web extending between the first end of the hub and the first outer rim, the first outer rim configured to engage the ring gear; and
a second disk-shaped member having a second outer rim and a second web extending between the second end of the hub and the second outer rim, the second outer rim configured to ground the torque transducer to the housing,
wherein at least one of the first web and the second web is configured to receive a strain gauge assembly operable to measure strain in the first web or the second web and to generate an output signal in response thereto, the output signal configured for use in determining the torque delivered to the spindle of the power tool.

2. The torque transducer as recited in claim 1, wherein the power tool further comprises a motor mount configured to mount the motor within the housing so that the motor is immobile with respect to the housing, the second outer rim configured to engage the motor mount for grounding the torque transducer to the housing.

3. The torque transducer as recited in claim 2, wherein the first outer rim includes a first outer surface having a first external spline, the first external spline configured to mesh with a first internal spline disposed in a first inner surface of the ring gear.

4. The torque transducer as recited in claim 3, wherein the second outer rim includes a second outer surface having a second external spline, the second external spline configured to mesh with a second internal spline disposed in a second inner surface of the motor mount.

5. The torque transducer as recited in any one of the preceding claims, wherein the at least one strain gauge assembly comprises a first strain gauge assembly coupled to the first web for measuring strain in the first web and generating a first output signal in response thereto, the first output signal being proportional to the torque applied the spindle of the power tool.

6. The torque transducer as recited in claim 5, wherein the at least one strain gauge assembly comprises a second strain gauge assembly coupled to the second web for measuring strain in the second web and generating a second output signal in response thereto, the second output signal being proportional to the torque applied the spindle of the power tool.

7. The torque transducer as recited in claim 6, wherein the first signal and the second signal are independent and redundant.

8. A power tool, comprising:
a housing;
a motor mounted within the housing, the motor including an output pinion;
a drive train operably coupled to the output pinion of the motor and operable to deliver torque from the output pinion to a spindle of the power tool, the drive train including a ring gear; and
a torque transducer configured to measure the torque delivered to the spindle, the torque transducer being the torque transducer as recited by any one of the preceding claims.

9. The power tool as recited in claim 8, wherein the first outer rim includes a first outer surface having a first external spline and the ring gear includes a first inner surface having a first internal spline, the first external spline configured to mesh with the first internal spline.

10. The power tool as recited in claim 8, wherein the motor mount is configured to mount the motor within the housing so that the motor is immobile with respect to the housing, wherein the second outer rim includes a second outer surface having a second external spline and the motor mount includes a second inner surface having a second internal spline, the second external spline configured to mesh with the second internal spline for grounding the torque transducer to the housing.

11. A torque transducer for a power tool having a housing, an output spindle, and a motor mounted in the housing for delivering torque to the output spindle via a drive train having a ring gear, the torque transducer comprising:
a hub having distal first and second ends;
a first disk-shaped member having a first outer rim and a first web extending between the first end of the hub and the first outer rim, the first outer rim configured to engage the ring gear of the drive train; and
a second disk-shaped member having a second outer rim and a second web extending between the second end of the hub and the second outer rim, the second outer rim configured to ground the torque transducer to the housing.

12. The torque transducer as recited in claim 11, wherein the torque transducer is further characterised as recited in any one of the claims 2 to 7.
